# EUROPÄISCHE PATENTSCHRIFT

(11) **EP 1 757 184 B1**
(45) Veröffentlichungstag und Bekanntmachung des Hinweises auf die Patenterteilung: **20.08.2008**
(21) Anmeldenummer: 06017334.1
(22) Anmeldetag: 21.08.2006
(51) Int. Cl.: A01G 23/099, G01B 5/00

(54) **Vorrichtung zum Ausrichten einer Fallkerbe**
Device for adjusting a felling kerf
Dispositif pour ajuster une enclenche d'abattage

(30) Priorität: 25.08.2005 AT 13992005
(43) Veröffentlichungstag der Anmeldung: 28.02.2007
(73) Patentinhaber: Felhofer, Franz, 4160 Aigen-Schlägl (AT)
(72) Erfinder: Felhofer, Franz, 4160 Aigen-Schlägl (AT)

(56) Entgegenhaltungen:
- DE-A1- 4 001 907
- DE-B3- 10 315 939
- DE-U1- 29 811 186
- FR-A1- 2 610 716
- US-A1- 2002 069 542

## Beschreibung

Die Erfindung betrifft eine Vorrichtung zum richtigen Ausrichten der Fallkerbe gemäß Anspruch 1, welche zum Einstellen der richteten Fallrichtung beim Fällen eines vertikalen Körpers, wie insbesondere eines Baumes, in den Körper (Baumstamm) geschnitten wird.

Die am häufigsten angewendete Methode zur Einstellung der Fallrichtung eines Baumes wenn dieser umgeschnitten wird, besteht darin, am noch stehenden Baum, in der Höhe an welcher der Baum abgeschnitten wird, an jener Seite des Baumstammes, nach welcher der Baum fallen soll, eine V-förmige, horizontal ausgerichtete Nut, "Fallkerbe" genannt, in den Baumstamm hineinzuschneiden. Danach wird von der gegenüberliegenden Seite des Baumstammes her ein gerader Schnitt auf die tiefste Stelle - in der Fachsprache und im folgenden "Fallkerbkante" genannt - der Fallkerbe zu geführt. Wenn dieser Schnitt - in der Fachsprache und im folgenden "Fällschnitt" genannt - in die Nähe der Fallkerbkante gelangt, ist der ungeschnittene Teil der Querschnittsfläche des Baumstammes nur mehr ein länglicher Streifen entlang der Fallkerbkante. Durch einen kleinen Anstoß - erforderlichenfalls durch einen Keil, welcher in den Spalt des Fällschnittes eingetrieben wird - fällt der Baum auf die Seite der Fallkerbe zu, wobei der ungeschnittene Querschnittsbereich an diesem länglichen Streifen erst gebogen und dann abgebrochen wird. Gegen Fallen in eine falsche Richtung wird der Baum durch die geometrischen Verhältnisse an der Fallkerbe ausreichend gut gehalten, so lange keine großen störenden äußeren Kräfte - beispielsweise in Folge von Wind - überwiegen.
Die Ausrichtung der Fallkerbe am Baumstamm bestimmt die Fallrichtung des Baumes sehr genau. Zumindest während des ersten Teils des Fallens dreht sich der Baum um die durch die Fallkerbkante gebildete Drehachse. Damit liegt die Ebene in der sich der Baum beim Umfallen von der senkrechten Stellung in eine liegende Stellung dreht, zur Fallkerbkante normal.

Bei manchen, für das Fällen von Bäumen vorgesehen Kettensägen, ist am Gehäuse der Antriebseinheit eine Linie eingezeichnet, welche bei Projektion auf die Ebene des Schwertes der Kettensäge normal auf die Schnittkante des Schwertes liegt. Wenn daher die Schnittkante der Kettensäge an der Fallkerbkante anliegt, zeigt besagte Linie in welche Richtung der Baumstamm fallen wird. Diese Methode ist sehr einfach und praktisch, hat aber den Nachteil, dass mit ihr die Fallrichtung nur relativ ungenau vorhergesagt werden kann, da in den meisten Fällen nicht erkennbar ist, wohin diese kurze Linie wirklich zielt.

Die DE 4001907 zeigt einen sog. Baumheber. Das ist eine Vorrichtung, welche am stehenden Baum in die Schnittebene des Fällschnittes gegenüber der Fallkerbe eingebracht wird, und dann die beiden Schnittflächen auseinander drückt. Mit Hilfe dieser Vorrichtung lässt sich auch gegen störende äußere Kräfte erzwingen, dass der Baum in die durch die Fallkerbe vorgegebene Richtung fällt. Daran, dass er nicht exakt richtig fällt, wenn die Fallkerbe schon falsch ausgerichtet ist, ändert diese Vorrichtung auch nichts.

Die DE-B3-103 15 939 offenbart ein Baumscharnier für sicheres und gezieltes Baumfällen beim Verbestimmen der Fallrichtung.

Der Erfinder hat sich die Aufgabe gestellt, eine Vorrichtung zur Verfügung zu stellen, welche dabei hilft, Fallkerben exakter auszurichten. Bedingungen dabei sind, dass die Vorrichtung einfach zu bedienen sein muss, dass sie - vor allem aus Transportgründen - klein und leicht sein soll, und dass sie kostengünstig sein soll.

Es wird eine Messvorrichtung vorgeschlagen, welche aus einem Linealteil mit einer geraden Messkante und einem normal zu dieser Messkante ausgerichteten Leuchtzeiger besteht. Zur Überprüfung der Ausrichtung einer Fallkerbe wird der Linealteil der Messvorrichtung so in die Fallkerbe eingelegt, dass die Messkante an der Fallkerbkante anliegt. Der normal zur Messkante ausgerichtete Leuchtzeiger wird eingeschaltet und zeigt mit seinem Leuchtstrahl parallel zu der Ebene in welcher der Baum entsprechend der Fallkerbe fällt in die Ferne. Die Messvorrichtung wird um die Messkante so geschwenkt, dass der Leuchtstrahl des Leuchtzeigers auf die interessierende Höhe zeigt, und ein heller Punkt oder Bereich dort im Gelände sichtbar wird, wohin der Baum fallen wird. Um erforderlichenfalls die Sichtbarkeit des Wiederschein des Leuchtstrahls im Gelände zu verbessern, kann man im interessierenden Geländebereich einen Gegenstand mit gut lichtreflektierender Oberfläche platzieren.

Die Erfindung wird an Hand der Zeichnungen anschaulicher:
- Fig. 1:: zeigt die Vorrichtung gemäß der Erfindung im Einsatz, wobei die Blickrichtung parallel zur Profilrichtung der Fallkerbe am Baumstamm, also horizontal liegt.
- Fig. 2:: zeigt die erfindungsgemäße Vorrichtung von Fig. 1 allein von oben. Die Vorrichtung ist als zusammenklappbarer Winkel ausgeführt.
- Fig. 3:: zeigt eine Ausführungsform der erfindungsgemäßen Vorrichtung in Kombination mit einer Kettensäge.

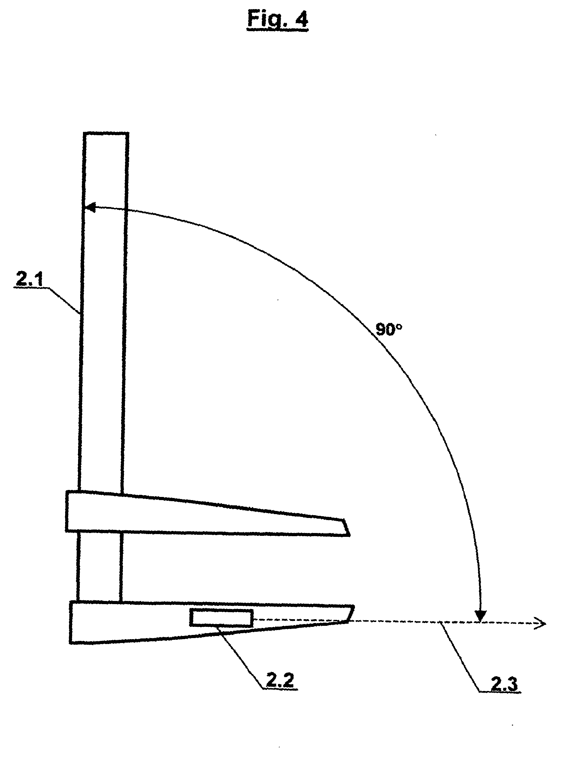

- Fig. 4:: zeigt eine Ausführungsform der erfindungsgemäßen Vorrichtung in Kombination mit einer sog. Maßkluppe, einer Art Schiebelehre, welche bei der Waldarbeit zum Messen des Durchmessers des Baumstammes mitgeführt wird.

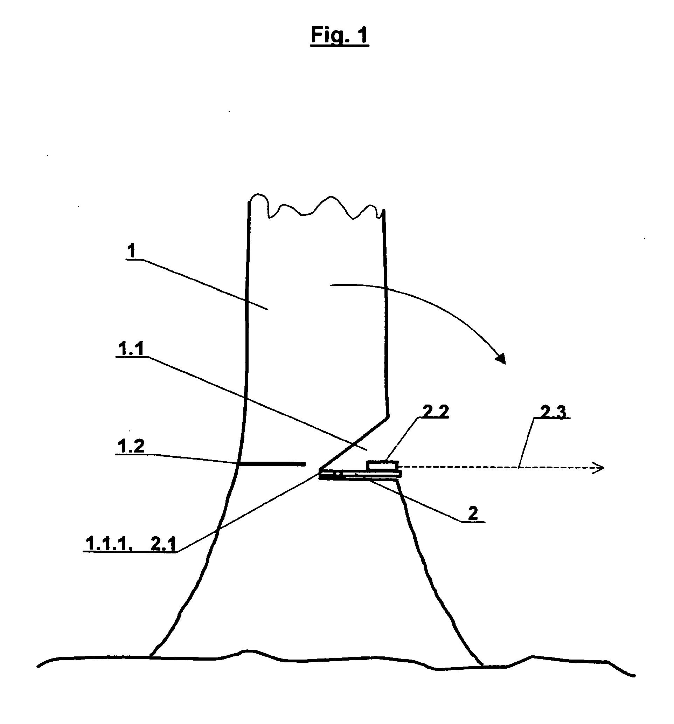

Das Fällen des Baumes gemäß Fig. 1 erfolgt im Regelfall in folgenden Schritten.
- Auf jener Seite des Stammes 1, auf welche der Baum fallen soll, wird durch zwei Schnitte - im Normalfall mit Hilfe einer Kettensäge - eine Fallkerbe 1.1 geschnitten. Diese Fallkerbe ist eine horizontal verlaufende, seitlich offene Nut mit V-förmiger Querschnittsfläche.
- Die Messkante 2.1 der in Betriebsstellung gebrachten Messvorrichtung 2 wird an die Fallkerbkante 1.1.1 angelegt. Der eingeschaltete Leuchtzeiger 2.2 der Messvorrichtung wirft einen Leuchtstrahl 2.3 auf jene Seite des Baumstammes, auf welche der Baumstamm fallen soll.
- Erforderlichenfalls wird die Fallkerbe etwas nachgeschnitten, sodass bei der Messung der Leuchtstrahl 2.3 in die gewünschte Richtung zeigt.
- Von der, der Fallkerbe 1.1 gegenüberliegenden Seite des Stammes 1 her wird ein Fällschnitt 1.2 auf die Fallkerbe zu geführt. Dabei soll die vordere Randlinie des Schnittes möglichst gerade, und parallel zur Fallkerbkante 1.1.1 ausgerichtet sein.
- Sobald der Bereich zwischen Fällschnitt 1.2 und Fallkerbe 1.1 ausreichend schmal ist, fällt der Baum entweder von selbst, oder er wird auf die Seite hin gedrückt, auf welche er fallen soll, bis er in gewünschter fällt. Die Druckkraft kann beispielsweise per Hand aufgebracht werden, oder mit Hilfe eines Keils, welcher in die Ebene des Fällschnittes 1.2 eingetrieben wird.

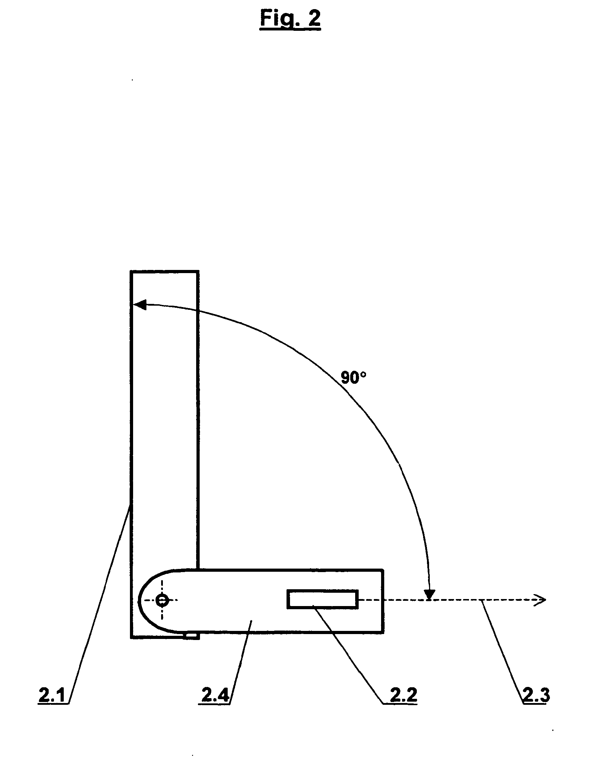

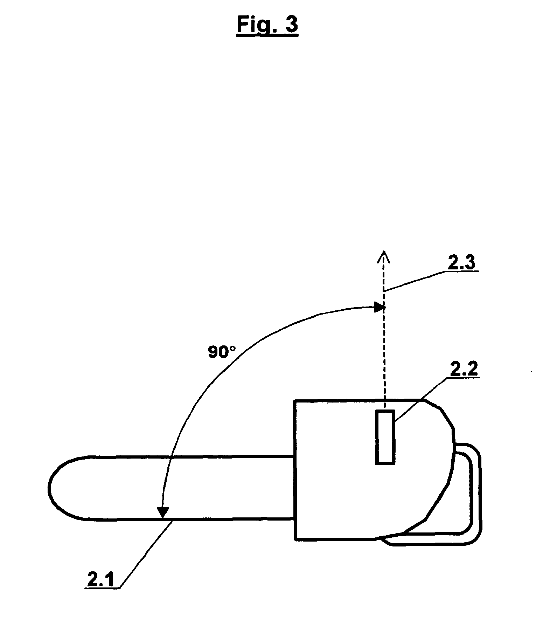

Indem mit Hilfe der erfindungsgemäßen Vorrichtung sehr sicher bestimmt werden kann, wohin der Baum fällt, wird vermieden, dass der fallende Baum andere Bäume, sich selbst oder sonstige Objekte beschädigt, und auch nicht an anderen Bäumen in halb aufrechter Stellung hängen bleibt.
In den Zeichnungen werden beispielhaft drei Ausführungsformen skizziert. Allen gemeinsam ist, dass eine gerade Messkante 2.1 vorkommt, welche bestimmungsgemäß an die Fallkerbkante 1.1.1 angelegt wird, und ein Leuchtzeiger 2.2, welcher einen Leuchtstrahl 2.3 aussendet, welcher normal zur Messkante 2.1 gerichtet, von dieser weg leuchtet.
Bei der Ausführungsform gemäß Fig. 1 und Fig. 2 sind Messkante 2.1 und Leuchtzeiger 2.2 auf zwei zueinander schwenkbaren Schenkeln eines Winkels angeordnet. In Transportstellung sind die beiden Schenkel zueinander geschwenkt, sodass sie platzsparend parallel aneinander anliegen. In Einsatzstellung stehen sie im rechten Winkel zueinander; sie werden in dieser Stellung durch einen Anschlag gehalten.
Bei der Ausführungsform gemäß Fig. 3 wird die Messkante 2.1 durch eine gerade Schneidekante des Schwertes einer Kettensäge gebildet. Der Leuchtzeiger 2.2 ist am Gehäuse der Antriebseinheit der Kettensäge montiert, und zwar so, dass der von ihm abgestrahlte Leuchtstrahl 2.3 normal auf die Messkante steht. Die Energie für den Leuchtzeiger kann bei dieser Ausführungsform durch die Antriebseinheit der Kettensäge bereitgestellt werden.
Bei der Ausführungsform gemäß Fig. 3 ist die Messkante 2.1 die äußere Längskante des Linealteils einer sogenannten Maßkluppe, einer Art Schiebelehre, welche bei der Waldarbeit zum Messen des Durchmessers von Baumstämmen mitgeführt wird. Der Leuchtzeiger 2.2 ist an dem bezüglich dem Linealteil fest stehenden Zangenteil der Maßkluppe montiert, und zwar wiederum so, dass der von ihm abgestrahlte Leuchtstrahl 2.3 normal auf die Messkante steht.

Der Leuchtzeiger 2.2 besteht im Normalfall aus einem Gehäuse mit darin angeordneter Batterie, Lichtquelle und Optik zur Bündelung des Lichtes zu einem Strahl mit passender Querschnittsform. Als Lichtquelle eignen sich kleine Rotlicht-Laser, Leuchtdioden und Glühlampen. Die Optik kann das Licht zu einem dünnen, strichartigen Strahl bündeln, oder zu einem Fächer von mehreren strichartigen Strahlen, welche alle in einer gemeinsamen Ebene liegen, welche zur Messkante 2.1 normal liegt, oder zu einem Strahlenbündel mit der Querschnittsform einer geraden Linie, welches sich in einer zur Messkante 2.1 normal liegenden Dreiecksfläche ausbreitet.
Ein sehr guter und kostengünstiger Leuchtzeiger 2.2 für die Messvorrichtung kann dadurch realisiert werden, dass ein herkömmlicher Laserpointer, wie er für Vortragstätigkeiten verwendet wird, passend an einer Messvorrichtung montiert wird.
Wenn der Leuchtzeiger 2.2 kurz gebaut ist, kann die Messvorrichtung 2 allereinfachst durch eine gerade Latte mit Messkante 2.1 und einem darauf angeordneten, zur Messkante normal stehenden Leuchtzeiger 2.2, realisiert werden.

Für die einwandfreie Funktion der beschriebenen Vorrichtung ist es wichtig, dass die Profilrichtung der Fallkerbe einigermaßen genau horizontal liegt, da nämlich nur dann die Ebene in welcher der Baum fällt eindeutig vertikal liegt. Liegt die Profilrichtung der Fallkerbe geneigt, so liegen ihre Normalebenen nicht vertikal. Der Baum wird zumindest gegen Ende seiner Fallbewegung - wenn der ungeschnittene Bereich an der Fallkerbe gebrochen ist - aus der Parallelen zu diesen Ebenen herausbewegt. Die Vorhersage mittels der erfindungsgemäßen Vorrichtung wohin der Baum fällt, stimmt dann zumindest nicht mehr genau.
Für normale Anwendungen in der Forstwirtschaft reicht das Augenmaß jener Waldarbeiter aus, welche die Bäume fällen, um die Fallkerbe ausreichend genau horizontal auszurichten, damit die erfindungsgemäße Messvorrichtung genügend genau arbeitet. Wenn man die Genauigkeit noch verbessern will, kann man die erfindungsgemäße Vorrichtung noch mit einer Messvorrichtung, beispielsweise einer kleinen Wasserwaage versehen, mit Hilfe derer angezeigt wird, ob die Fallkerbe horizontal ausgerichtet ist.

Natürlich ist die Anwendung der erfindungsgemäßen Vorrichtung nicht auf Fallkerben zum Fällen von Bäumen beschränkt. Sie lässt sich überall dort anwenden, wo hohe, im wesentlichen vertikale stehende Körper umgeschnitten werden, und in eine vorbestimmte Richtung fallen sollen.

## Patentansprüche

1. Vorrichtung zum richtigen Ausrichten einer Fallkerbe, **gekennzeichnet dadurch, dass** sie mit einer Messkante (2.1) an die Fallkerbkante (1.1.1) der Fallkerbe (1.1) des zu fällenden Körpers (1) angelegt wird und mittels eines Leuchtzeigers (2.2) einen Leuchtstrahl (2.3) in einer zur Messkante (2.1) normal liegenden Ebene sendet.

2. Vorrichtung nach Anspruch 1, **gekennzeichnet dadurch, dass** der Leuchtzeiger mehrere einzelne Leuchtstrahlen (2.3) sendet, welche in einer gemeinsamen, zur Messkante (2.1) normal liegenden Ebene verlaufen.

3. Vorrichtung nach Anspruch 1, **gekennzeichnet dadurch, dass** der vom Leuchtzeiger (2.2) ausgesandte Leuchtstrahl (2.3) die Querschnittsform einer geraden Linie hat, und sich in einer zur Messkante (2.1) normal liegenden Dreiecksfläche ausbreitet.

4. Vorrichtung nach Anspruch 1, **gekennzeichnet dadurch, dass** der Leuchtzeiger (2.2) durch einen Laserpointer realisiert wird.

5. Vorrichtung nach einem der vorgenannten Ansprüche, **gekennzeichnet dadurch, dass** sie zwei zueinander drehbare Schenkel umfasst, welche zueinander aus einer ausgeklappten Betriebsstellung in eine eingeklappte Transportstellung mit im wesentlichen parallel aneinander anliegenden Schenkeln gebracht werden können.

6. Vorrichtung nach einem der Ansprüche 1 bis 4, **gekennzeichnet dadurch, dass** sie realisiert wird, indem der Leuchtzeiger (2.2) so an einer eine Messkante (2.1) aufweisenden Latte befestigt wird, dass er normal zur Messkante (2.1) ausgerichtet ist.

7. Vorrichtung nach einem der Ansprüche 1 bis 4, **gekennzeichnet dadurch, dass** sie realisiert wird, indem der Leuchtzeiger (2.2) an einem ansonsten auch bei der Waldarbeit verwendeten Gerät derart montiert wird, dass eine gerade Kante dieses Gerätes zu dem Leuchtzeiger normal steht, und als Messkante (2.1) an die Fallkerbkante (1.1.1) der Fallkerbe (1.1) angelegt werden kann.

8. Vorrichtung nach Anspruch 7, **gekennzeichnet dadurch, dass** die Messkante (2.1) eine gerade Schneidkante des Schwertes einer Kettensäge ist.

9. Vorrichtung nach Anspruch 8, **gekennzeichnet dadurch, dass** die Energie für den Betrieb des Leuchtzeigers (2.2) durch die Antriebseinheit der Kettensäge bereitgestellt wird.

10. Vorrichtung nach Anspruch 7, **gekennzeichnet dadurch, dass** die Messkante (2.1) eine Kante des Linealteils einer Maßkluppe ist, welche im übrigen dazu dient, den Durchmesser von Baumstämmen zu messen.

11. Vorrichtung nach einem der vorgenannten Ansprüche, **gekennzeichnet dadurch, dass** sie in Kombination mit einer Messvorrichtung verwendet wird, mit Hilfe derer die horizontale Profilausrichtung der Fallkerbe überprüft werden kann.

12. Vorrichtung nach Anspruch 11, **gekennzeichnet dadurch, dass** die Messvorrichtung mit Hilfe derer die horizontale Profilausrichtung der Fallkerbe überprüft werden kann, eine zur Messkante (2.1) parallel ausgerichtet befestigte Wasserwaage ist.

## Claims

1. Device for correctly adjusting a felling kerf, **characterized by** the placing of an angle measure tool (2.1) on the angle (1.1.1) of the kerf (1.1) on the object to be felled (1) and by means of a light pointer (2.2) emitting a light beam (2.3) along the angle measure tool's (2.1) normal horizontal plane.

2. The device, according to claim 1, is **characterized** thereby, that the light pointer (2.2) sends several individual light beams (2.3) that run together along the angle measure tool's (2.1) normal horizontal plane.

3. The device, according to claim 1, is **characterized** thereby, that the light beams (2.3) emitted by the light pointer (2.2) have the profile of a straight line and spread out in the angle measure tool's (2.1) normal triangular plane.

4. The device, according to claim 1 is **characterized** thereby, that the light pointer (2.2) is actualized via a laser pointer.

5. The device, according to one of the aforementioned claims, is **characterized** thereby that it comprises of two pivoting arms, which can be collapsed from an unfolded operational to a transportable position that has arms which fold together parallel to each other.

6. The device, according to claims 1 to 4, is **characterized** thereby that it is actualized by fastening the light pointer (2.2) to a bar that the angle measure tool is pointing to in such a way that it is aimed normally at the angle measure tool (2.1).

7. The device, according to claims 1 to 4, is **characterized** thereby that it is actualized by mounting the light pointer (2.2) on a device otherwise also used for forestry work in such a way that a straight edge of this device is positioned in a normal manner to the light pointer (2.2) and can be applied as an angle measure tool (2.1) in the angle (1.1.1) of the kerf (1.1)

8. The device, according to claim 7, is **characterized** thereby that the angle measure tool (2.1) is a straight cutting edge of the chainsaw's guide bar.

9. The device, according to claim 8, is **characterized** thereby that the energy for the operation of the light pointer (2.2) will be supplied by the chainsaw's drive unit.

10. The device, according to claim 7, is **characterized** thereby that the angle measure tool (2.1) is an edge of the lineal part of a mass measuring tool which, apart from that, also serves to measure the diameter of tree trunks.

11. The device, according to one of the aforementioned claims, is **characterized** thereby that it is to be used in combination with a measuring device with the help of which the horizontal profile alignment of the felling kerf can be checked.

12. The device, according to claim 11, is **characterized** thereby that the measuring device with the help of which the horizontal profile alignment of the felling kerf can be checked, is a parallel aligned spirit level attached to the angle measure tool (2.1).

## Revendications

1. Dispositif pour la réalisation précise d'une entaille de direction, **caractérisé par le fait qu'**il est posé avec une arête de mesure (2.1) sur le bord (1.1.1.) de l'entaille de direction (1.1) de l'arbre à abattre (1) et qu'il émet au moyen d'un pointeur lumineux (2.2) un rayon lumineux (2.3) dans un plan normal par rapport à l'arête de mesure (2.1).

2. Dispositif selon la revendication 1, **caractérisé par le fait que** pointeur lumineux émet plusieurs rayons lumineux séparés (2.3) suivant un tracé commun dans un plan normal par rapport à l'arête de mesure (2.1).

3. Dispositif selon la revendication 1, **caractérisé par le fait que** le rayon lumineux (2.3) émis par le pointeur lumineux (2.2) présente une section transversale correspondant à la forme d'une ligne droite et qu'il s'élargit sous la forme d'une surface triangulaire dans un plan normal par rapport à l'arête de mesure (2.1).

4. Dispositif selon la revendication 1, **caractérisé par le fait que** le pointeur lumineux 2.2) est un pointeur laser.

5. Dispositif selon l'une des revendications précitées, **caractérisé par le fait qu'**il comporte deux branches tournant l'une par rapport à l'autre et qui peuvent être mise de la position en service écartée en une position de transport repliée de sorte que es deux branches se trouvent pratiquement parallèles l'une à l'autre.

6. Dispositif selon l'une des revendications 1 à 4, **caractérisé par le fait qu'**il est réalisé de manière à ce que le pointeur lumineux (2.2) soit fixé sur une règle avec arête de mesure (2.1) de façon telle qu'il soit normalement centré par rapport à arête de mesure (2.1).

7. Dispositif selon l'une des revendications 1 à 4, **caractérisé par le fait qu'**il est réalisé de manière à ce que le pointeur lumineux (2.2) soit monté sur un autre appareil utilisé en sylviculture de façon à ce que cet appareil et le pointeur forme un bord normal en ligne droite et puisse être placé en tant qu'arête de mesure (21) sur le bord (1.1.1) de l'entaille de direction (1.).

8. Dispositif selon la revendication 7, **caractérisé par le fait que** l'arête de mesure (2.1) est représentée par le bord coupant droit de la lame d'une scie à chaîne.

9. Dispositif selon la revendication 8, **caractérisé par le fait que** l'alimentation en énergie du pointeur lumineux (2.2) est assurée par l'unité de commande de la scie à chaîne.

10. Dispositif selon la revendication 7, **caractérisé par le fait que** l'arête de mesure (2.1) est représentée par le bord de la règle d'un calibre qui au demeurant est utilisé pour mesurer le diamètre des troncs d'arbre.

11. Dispositif selon l'une des revendications précitées, **caractérisé par le fait qu'**il est utilisé en combinaison avec un dispositif de mesure au moyen duquel il est possible de contrôler l'orientation horizontale du profil de l'entaille de direction.

12. Dispositif selon la revendication 11, **caractérisée par le fait que** le dispositif de mesure au moyen duquel s'effectue le contrôle de l'orientation horizontale du profil de l'entaille de direction est un niveau à eau positionné parallèlement à l'arête de mesure (2.1).
